# EUROPEAN PATENT SPECIFICATION

(11) **EP 2 733 979 B1**
(45) Date of publication and mention of the grant of the patent: **30.03.2016**
(21) Application number: 12820204.1
(22) Date of filing: 12.07.2012
(51) Int. Cl.: H04W 24/04, H04L 12/721, H04L 12/707, H04L 12/703, H04L 29/12, H04L 12/713, H04L 12/775, H04W 76/04

(54) **METHOD AND APPARATUS FOR CONTROLLING SWITCHING OF ACTIVE/STANDBY PSEUDO WIRES**
VERFAHREN UND VORRICHTUNG ZUR STEUERUNG EINES WECHSELS ZWISCHEN AKTIVEN/STANDBY-PSEUDODRÄHTEN
PROCÉDÉ ET APPAREIL DE COMMANDE DE COMMUTATION DE PSEUDO-CIRCUITS ACTIFS/DE SECOURS

(30) Priority: 02.08.2011 CN 201110219828
(43) Date of publication of application: 21.05.2014
(73) Proprietor: Huawei Technologies Co., Ltd., Longgang District Shenzhen, Guangdong 518129 (CN)
(72) Inventor: LIU, Changbao, Shenzhen Guangdong 518129 (CN)
(74) Representative: Epping - Hermann - Fischer
(86) International application number: PCT/CN2012/078535
(87) International publication number: WO 2013/017011

(56) References cited:
- WO-A2-2008/109043
- CN-A- 101 123 563
- CN-A- 101 820 397
- CN-A- 102 025 541
- CN-A- 102 223 660
- US-A1- 2008 247 399
- BRADEN J POSTEL ISI R: "Requirements for Internet Gateways; rfc1009.txt", 19870601, 1 June 1987 (1987-06-01), XP015005945, ISSN: 0000-0003
- POSTEL ISI J: "Multi-LAN Address Resolution; rfc925.txt", 19841001, 1 October 1984 (1984-10-01), XP015006918, ISSN: 0000-0003

## Description

### TECHNICAL FIELD

The present invention relates to the field of communications, and in particular to a method and an apparatus for controlling switching between an active pseudo-wire and a standby pseudo-wire.

### BACKGROUND

A radio access network is developing towards an IP-based radio access network, that is, an IP RAN (Radio Access Network, radio access network) technology. In a current system that is networked by using the IP RAN technology, a PWE3 (Pseudo-Wire Emulation Edge to Edge, pseudo-wire emulation edge-to-edge) technology is used; on an access side of a pseudo-wire (Pseudo-Wire, PW), a cell-site gateway (Cell-Site Gateway, CSG), by using a PW redundancy (Redundancy) protection technology of the PWE3, is connected to a first provider edge-aggregation (Provider Edge-Aggregation) and a second provider edge-aggregation in dual-homing mode, and a BTS/NB (Base Transceiver Station/Node Base, base transceiver station/NodeB) is connected to the cell-site gateway. After terminating the PW through an Ethernet port, the first provider edge-aggregation and the second provider edge-aggregation connect to a VPLS (Virtual Private Local Area Network Service, virtual private local area network service) of a first user-facing provider edge (User-Facing PE) and a VPLS of a second user-facing provider edge, respectively. A BSC/RNC (Base Station Controller/Radio Network Controller, base station controller/radio network controller) is connected to the first user-facing provider edge and the second user-facing provider edge. The VPLS of the first user-facing provider edge interworks with the VPLS of the second user-facing provider edge. This ensures that once an active PW is faulty, traffic in a standby PW can reach the second user-facing provider edge and then can be sent to the first user-facing provider edge through the VPLS.

When a link works normally, which means both the active PW and the standby PW are available, a virtual switch instance VSI (Virtual Switch Instance) of the first user-facing provider edge learns a MAC (Media Access Control, media access control) address of a base station from an access side (the provider edge-aggregation side), and learns a MAC address of the BSC/RNC from another side (the BSC/RNC side). Traffic from the BTS/NB to the BSC/RNC is uplink traffic, and traffic from the BSC/RNC to the BTS/NB is downlink traffic. When the active PW between the cell-site gateway and the provider edge-aggregation is faulty, the VSI of the first user-facing provider edge cannot sense the fault and therefore cannot clear the learned MAC address. As a result, the downlink traffic from the BSC/RNC to the BTS/NB always follows an original path, but the original path is disconnected at this time.

When the active PW is faulty, an existing method is performing switching between the active PW and the standby PW by using a heartbeat packet between the BTS/NB and the BSC/RNC. However, the method for performing switching between the active PW and the standby PW according to the heartbeat packet depends on a frequency of the heartbeat packet and therefore is uncontrollable.

CN 101820397 A (H3C TECHNOLOGIES CO LTD) discloses a network convergence method and a device in a virtual private local area network. The method comprises the following steps: when the UPE detects main PW fault, switching to the corresponding spare PW, transmitting a MAC address refreshing message to the NPE through the spare PW, so that the NPE in the virtual local area network updates the congruent relationship between the MAC address and the PW in a MAC forwarding list by refreshing message through the MAC address, thereby ensuring the normal forward of the message. The method does not need to delete a great deal of MAC addresses, quickly realize network convergence, and reduces the effect of link switching on the VPN.

### SUMMARY

The present invention provides a method and an apparatus for controlling switching between an active pseudo-wire and a standby pseudo-wire to address the technical issue.

According to a first aspect of the present invention, a method for controlling switching between an active pseudo-wire and a standby pseudo-wire is provided, where the method includes:
when the active pseudo-wire PW is faulty, receiving, by an Address Resolution Protocol ARP proxy, a pseudo-wire PW redundancy switching message;
sending, by the ARP proxy, according to the pseudo-wire PW redundancy switching message and by using the standby pseudo-wire, an ARP packet monitored by an ARP monitoring module to a provider edge-aggregation PE-AGG2 connected with the standby pseudo-wire PW, wherein the ARP monitoring module monitors an ARP packet from the base station side according to a protocol type of the ARP packet;
sending, by the PE-AGG2, the ARP packet to a second user-facing provider edge UPE2 connected to the PE-AGG2;
triggering, by the UPE2, a virtual switch instance VSI of the UPE2 to learn a source hardware address of the ARP packet;
sending, by the UPE2, the ARP packet to a first user-facing provider edge UPE1 corresponding to the active pseudo-wire; and
triggering, by the UPE1, a VSI of the UPE1 to learn the source hardware address of the ARP packet so as to switch downlink traffic to the standby pseudo-wire PW.

Further, the ARP proxy is configured on an access side of the active pseudo-wire PW and the standby pseudo-wire PW, and is specifically configured on a base station side of a cell-site gateway.

Further, the ARP monitoring module is configured on the access side of the active pseudo-wire PW and the standby pseudo-wire PW, and is specifically configured on the base station side of the cell-site gateway.

Further, the step of monitoring an ARP packet by the ARP monitoring module includes: monitoring an ARP packet from the base station side according to a protocol type of the ARP packet, and storing the monitored ARP packet in the cell-site gateway CSG of the base station.

Further, the PW redundancy switching message is sent from the faulty active PW.

According to a second aspect of the present invention, an apparatus for controlling switching between an active pseudo-wire and a standby pseudo-wire is provided, where the apparatus includes:
an Address Resolution Protocol ARP monitoring module, configured to monitor an ARP packet from the base station side according to a protocol type of the ARP packet; and
an ARP proxy, configured to, when the active pseudo-wire PW is faulty, receive a pseudo-wire PW redundancy switching message, and send, according to the PW redundancy switching message and by using a standby pseudo-wire PW, an ARP packet monitored by the ARP monitoring module to a provider edge-aggregation PE-AGG2 connected with the standby pseudo-wire PW, so that the PE-AGG2 sends the ARP packet to a second user-facing provider edge UPE2 connected to the PE-AGG2, the UPE2 triggers a virtual switch instance VSI of the UPE2 to learn a source hardware address of the ARP packet, the UPE2 sends the ARP packet to a first user-facing provider edge UPE1 corresponding to the active PW, and the UPE1 triggers a VSI of the UPE1 to learn the source hardware address of the ARP packet so as to switch downlink traffic to the standby pseudo-wire PW.

Further, the ARP proxy is configured on an access side of the active pseudo-wire PW and the standby pseudo-wire PW, and is specifically configured on a base station side of a cell-site gateway.

Further, the ARP monitoring module is configured on the access side of the active pseudo-wire PW and the standby pseudo-wire PW, and is specifically configured on the base station side of the cell-site gateway.

Further, the ARP monitoring module is configured to monitor an ARP packet from the base station side according to a protocol type of the ARP packet and store the monitored ARP packet in the cell-site gateway CSG of the base station.

Further, the PW redundancy switching message is sent from the faulty active PW.

When the method and apparatus for controlling switching between an active PW and a standby PW of the present invention are implemented, an ARP monitoring module always monitors an ARP packet sent from a base station side, and stores the monitored ARP packet; after an active PW is faulty, an ARP proxy receives a PW redundancy switching message, and sends, according to the redundancy switching message, the stored monitored ARP packet through a standby PW, and re-trigger a VSI of a UPE1 and a VSI of a UPE2 to learn a MAC address of the base station, so as to switch downlink traffic to the standby PW. In this way, the switching between the active PW and the standby PW is no longer determined according to a frequency of a heartbeat packet, thereby controlling the switching between the active PW and the standby PW and ensuring switching performance.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a method for controlling switching between an active pseudo-wire and a standby pseudo-wire according to an embodiment of the present invention;
FIG. 2 is a schematic diagram of a traffic path after switching between an active pseudo-wire and a standby pseudo-wire is controlled according to an embodiment of the present invention; and
FIG. 3 is a schematic diagram of an apparatus for controlling switching between an active pseudo-wire and a standby pseudo-wire according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

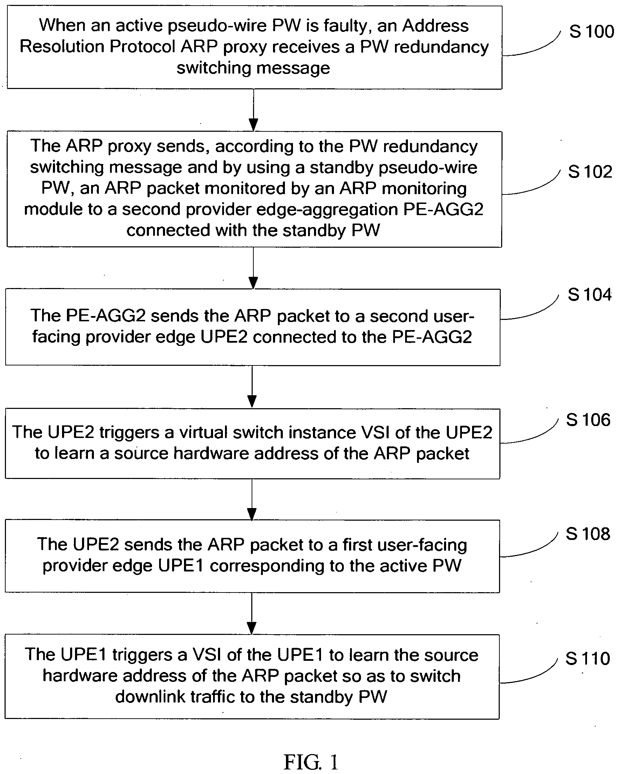

FIG. 1 is a schematic flowchart of a method for controlling switching between an active pseudo-wire and a standby pseudo-wire according to an embodiment of the present invention. The method includes:
S100. When the active pseudo-wire PW is faulty, an Address Resolution Protocol ARP proxy receives a PW redundancy switching message.
S102. The ARP proxy sends, according to the PW redundancy switching message and by using the standby pseudo-wire PW, an ARP packet monitored by an ARP monitoring module to a second provider edge-aggregation PE-AGG2 connected with the standby pseudo-wire PW.
S104. The PE-AGG2 sends the ARP packet to a second user-facing provider edge UPE2 connected to the PE-AGG2.
S106. The UPE2 triggers a virtual switch instance VSI of the UPE2 to learn a source hardware address of the ARP packet.
S108. The UPE2 sends the ARP packet to a first user-facing provider edge UPE1 corresponding to the active pseudo-wire PW.
S110. The UPE1 triggers a VSI of the UPE1 to learn the source hardware address of the ARP packet so as to switch downlink traffic to the standby PW.

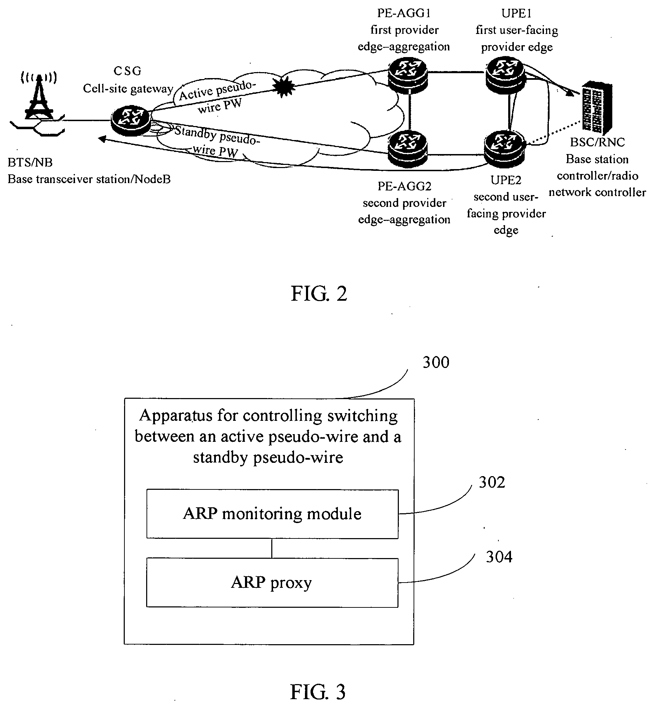

FIG. 2 is a schematic diagram of a network structure using an IP RAN technology. On an access side of a pseudo-wire PW, a cell-site gateway CSG, by using a PW redundancy protection technology of a PWE3, is connected to a first provider edge-aggregation PE-AGG1 and a second provider edge-aggregation PE-AGG2 in dual-homing mode; after terminating a PW through an Ethernet port, the PE-AGG1 and the PE-AGG2 connect to a virtual private local area network service VPLS of a first user-facing provider edge UPE1 and a VPLS of a second user-facing provider edge UPE2, respectively. A base transceiver station/NodeB BTS/NB is connected to the IP RAN network through a cell-site gateway CSG, and a base station controller/radio network controller BSC/RNC is connected to the UPE1 and the UPE2.

In the embodiment of the present invention, the Address Resolution Protocol (Address Resolution Protocol, ARP) proxy and the ARP monitoring module are configured on the access side of the active pseudo-wire PW and the standby pseudo-wire PW, and are specifically configured on the base station side of the cell-site gateway. The ARP monitoring module always (that is, before and after the active PW is faulty) monitors the ARP packet from the base station side according to a protocol type of the ARP packet, and stores the monitored ARP packet in the cell-site gateway CSG of the base station, where the protocol type may be obtained from a protocol type (Protocol Type) field in the ARP packet. When the active pseudo-wire PW is faulty, the active pseudo-wire PW between the cell-site gateway CSG and the first provider edge-aggregation PE-AGG1 in the network system cannot run traffic normally upon the occurrence of the fault. The ARP proxy receives a PW redundancy switching message. In the network structure provided in the embodiment of the present invention, the PW includes an active pseudo-wire PW and a standby pseudo-wire PW, and the PW redundancy switching message is a redundancy switching message sent from the faulty active PW and is used for switching to the standby PW.

The ARP proxy sends, according to the PW redundancy switching message and by using the standby pseudo-wire PW, an ARP packet monitored by the ARP monitoring module to the second provider edge-aggregation PE-AGG2 connected with the standby pseudo-wire PW; at this time, the standby pseudo-wire PW becomes the active PW; the PE-AGG2 sends the ARP packet to the second user-facing provider edge UPE2 connected to the PE-AGG2; the UPE2 triggers a virtual switch instance VSI of the UPE2 to learn a source hardware address (that is, a source MAC address) of the ARP packet, and the UPE2 sends the ARP packet to the first user-facing provider edge UPE1 corresponding to the active pseudo-wire PW; and the UPE1 triggers a VSI of the UPE1 to learn the source hardware address of the ARP packet so as to switch downlink traffic to the standby pseudo-wire PW. A traffic path upon the switching is shown in FIG. 2.

It should be noted that after the active pseudo-wire PW recovers, switching from the standby pseudo-wire PW to the active pseudo-wire PW is similar to the foregoing switching from the active pseudo-wire PW to the standby pseudo-wire PW, which is not further described herein.

When the foregoing method for controlling switching between an active PW and a standby PW is implemented, time of switching between an active PW and a standby PW and corresponding time of packet loss of downlink traffic are no longer determined according to a frequency of a heartbeat packet; instead, after the active pseudo-wire PW is faulty, an ARP proxy switches the downlink traffic to the standby pseudo-wire PW, that is, imports the downlink traffic to the standby pseudo-wire PW. In this way, traffic switching between the active PW and the standby PW is implemented, thereby ensuring that traffic switching time is controllable.

The method for controlling switching between an active pseudo-wire and a standby pseudo-wire of the present invention has been described with reference to the accompany drawings and exemplary embodiments. The following describes an apparatus for controlling switching between an active pseudo-wire and a standby pseudo-wire of the present invention with reference to the accompanying drawing and exemplary embodiments.

FIG. 3 is a schematic diagram of an apparatus for controlling switching between an active pseudo-wire and a standby pseudo-wire according to an embodiment of the present invention. The apparatus 300 for controlling switching between an active pseudo-wire and a standby pseudo-wire includes:
an Address Resolution Protocol ARP monitoring module 302, configured to monitor an ARP packet; and
an ARP proxy 304, configured to, when the active pseudo-wire PW is faulty, receive a pseudo-wire PW redundancy switching message, and send, according to the PW redundancy switching message and by using a standby pseudo-wire PW, an ARP packet monitored by an ARP monitoring module to a second provider edge-aggregation PE-AGG2 connected with the standby PW, so that the PE-AGG2 sends the ARP packet to a second user-facing provider edge UPE2 connected to the PE-AGG2, the UPE2 triggers a virtual switch instance VSI of the UPE2 to learn a source hardware address of the ARP packet, the UPE2 sends the ARP packet to a first user-facing provider edge UPE1 corresponding to the active PW, and the UPE1 triggers a virtual switch instance VSI of the UPE1 to learn the source hardware address of the ARP packet so as to switch downlink traffic to the standby pseudo-wire PW.

In the embodiment of the present invention, the ARP monitoring module 302 and the ARP proxy are configured on an access side of the active pseudo-wire PW and the standby pseudo-wire PW, and are specifically configured on a base station side of a cell-site gateway. Specifically, the ARP monitoring module monitors the ARP packet sent from the base station side according to a protocol type of the ARP packet, and stores the monitored ARP packet in the cell-site gateway CSG of the base station, where the protocol type is a protocol type (Protocol Type) field in an ARP packet. When the active PW is faulty, the ARP proxy receives a PW redundancy switching message, and sends, according to the PW redundancy switching message and by using the standby pseudo-wire PW, an ARP packet monitored by the ARP monitoring module to the second provider edge-aggregation PE-AGG2 connected with the standby pseudo-wire PW (at this time, the standby PW becomes the active PW), so that the PE-AGG2 sends the ARP packet to the second user-facing provider edge UPE2 connected to the PE-AGG2, the UPE2 triggers a virtual switch instance VSI of the UPE2 to learn a source hardware address (that is, a source MAC address) of the ARP packet, the UPE2 sends the ARP packet to the first user-facing provider edge UPE1 corresponding to the active PW, and the UPE1 triggers a VSI of the UPE1 to learn the source hardware address of the ARP packet so as to switch downlink traffic to the standby pseudo-wire PW, that is, to import the downlink traffic to the standby pseudo-wire PW. The PW redundancy switching message is a redundancy switching message sent from the faulty active PW and is used for switching to the standby PW.

When the method and apparatus for controlling switching between an active pseudo-wire and a standby pseudo-wire of the present invention are implemented, switching between an active PW and a standby PW is no longer determined according to a frequency of a heartbeat packet; instead, when the active PW is faulty, an ARP proxy imports downlink traffic to the standby PW after the ARP proxy receives a PW redundancy switching message. In this way, traffic switching between the active PW and the standby PW is implemented, thereby ensuring that switching time is controllable.

A person of ordinary skill in the art may understand that all or a part of the processes of the methods in the foregoing embodiments may be implemented by a computer program instructing relevant hardware. The program may be stored in a computer readable storage medium. When the program runs, the processes of the foregoing methods in the embodiments are performed. The storage medium may be a magnetic disk, an optical disk, a Read-Only Memory (Read-Only Memory, ROM), or a Random Access Memory (Random Access Memory, RAM).

All such improvements and modifications shall fall within the protection scope of the present invention.

## Claims

1. A method for controlling switching between an active pseudo-wire and a standby pseudo-wire, comprising:
when an active pseudo-wire PW is faulty, receiving (S100), by an Address Resolution Protocol ARP proxy, a PW redundancy switching message;
sending (S102), by the ARP proxy, according to the PW redundancy switching message and by using a standby pseudo-wire, an ARP packet monitored by an ARP monitoring module to a provider edge-aggregation PE-AGG2 connected with the standby pseudo-wire, wherein the ARP monitoring module monitors an ARP packet from the base station side according to a protocol type of the ARP packet;
sending (S104), by the PE-AGG2, the ARP packet to a second user-facing provider edge UPE2 connected to the PE-AGG2;
triggering (S106), by the UPE2, a virtual switch instance VSI of the UPE2 to learn a source hardware address of the ARP packet;
sending (S108), by the UPE2, the ARP packet to a first user-facing provider edge UPE1 corresponding to the active pseudo-wire; and
triggering (S110), by the UPE1, a VSI of the UPE1 to learn the source hardware address of the ARP packet so as to switch downlink traffic to the standby PW.

2. The method according to claim 1, wherein the ARP proxy is configured on an access side of the active pseudo-wire and the standby pseudo-wire, and is specifically configured on a base station side of a cell-site gateway.

3. The method according to claim 1 or 2, wherein the ARP monitoring module is configured on the access side of the active pseudo-wire and the standby pseudo-wire, and is specifically configured on the base station side of the cell-site gateway.

4. The method according to any one of claims 1 to 3, wherein the step of monitoring an ARP packet by the ARP monitoring module comprises:
monitoring the ARP packet from the base station side according to a protocol type of the ARP packet, and storing the monitored ARP packet in the cell-site gateway CSG of the base station.

5. The method according to any one of claims 1 to 4, wherein the PW redundancy switching message is sent from the faulty active pseudo-wire PW.

6. An apparatus for controlling switching between an active pseudo-wire and a standby pseudo-wire, comprising:
an Address Resolution Protocol ARP monitoring module (302), configured to monitor an ARP packet from the base station side according to a protocol type of the ARP packet; and
an ARP proxy (304), configured to, when an active pseudo-wire PW is faulty, receive a pseudo-wire PW redundancy switching message, and send, according to the PW redundancy switching message and by using a standby pseudo-wire PW, an ARP packet monitored by the ARP monitoring module (302) to a provider edge-aggregation PE-AGG2 connected with the standby pseudo-wire PW, so that the PE-AGG2 sends the ARP packet to a second user-facing provider edge UPE2 connected to the PE-AGG2, the UPE2 triggers a virtual switch instance VSI of the UPE2 to learn a source hardware address of the ARP packet, the UPE2 sends the ARP packet to a first user-facing provider edge UPE1 corresponding to the active PW, and the UPE1 triggers a VSI of the UPE1 to learn the source hardware address of the ARP packet so as to switch downlink traffic to the standby PW.

7. The apparatus according to claim 6, wherein the ARP proxy (304) is configured on an access side of the active pseudo-wire and the standby pseudo-wire, and is specifically configured on a base station side of a cell-site gateway.

8. The apparatus according to claim 6 or 7, wherein the ARP monitoring module (302) is configured on the access side of the active pseudo-wire and the standby pseudo-wire, and is specifically configured on the base station side of the cell-site gateway.

9. The apparatus according to any one of claims 6 to 8, wherein:
the ARP monitoring module (302) is configured to monitor an ARP packet from the base station side according to a protocol type of the ARP packet and store the monitored ARP packet in the cell-site gateway CSG of the base station.

10. The apparatus according to any one of claims 6 to 9, wherein the PW redundancy switching message is sent from the faulty active PW.

11. A computer program product, **characterised by**, comprising computer program code, which, when executed by a computer unit, will cause the computer unit to perform the steps according to any one of claims 1 to 5.

12. A computer readable medium, **characterised in, that** computer program code according to claim 11 is stored on the computer readable medium.

## Patentansprüche

1. Verfahren zum Steuern des Umschaltens zwischen einer aktiven Pseudo-Wire und einer Standby-Pseudo-Wire, umfassend:
wenn eine aktive Pseudo-Wire PW fehlerhaft ist, Empfangen (S100) einer PW-Redundanzumschaltnachricht durch einen "Address Resolution Protocol"- bzw. ARP-Proxy;
Senden (S102) eines ARP-Pakets durch den ARP-Proxy gemäß der PW-Redundanzumschaltnachricht und durch Verwendung einer Standby-Pseudo-Wire, das durch ein ARP-Überwachungsmodul überwacht wird, zu einer mit der Standby-Pseudo-Wire verbundenen "Provider Edge-Aggregation" PE-AGG2, wobei das ARP-Überwachungsmodul ein ARP-Paket von der Basisstationsseite gemäß einem Protokolltyp des ARP-Pakets überwacht;
Senden (S104) des ARP-Pakets durch die PE-AGG2 zu einer zweiten benutzerzugewandten "Provider Edge" UPE2, die mit der PE-AGG2 verbunden ist;
Triggern (S106) einer virtuellen Schaltinstanz VSI der UPE2 durch das UPE2, eine Quellenhardwareadresse des ARP-Pakets zu erfahren;
Senden (S108) des ARP-Pakets durch die UPE2 zu einer ersten benutzerzugewandten "Provider Edge" UPE1, die der aktiven Pseudo-Wire entspricht; und
Triggern (S110) einer VSI des UPE1 durch die UPE1, die Quellenhardwareadresse des ARP-Pakets zu erfahren, um so Abwärtsstreckenverkehr auf die Standby-PW zu schalten.

2. Verfahren nach Anspruch 1, wobei der ARP-Proxy auf einer Zugangsseite der aktiven Pseudo-Wire und der Standby-Pseudo-Wire konfiguriert ist und spezifisch auf einer Basisstationsseite eines Zellenstandort-Gateway konfiguriert ist.

3. Verfahren nach Anspruch 1 oder 2, wobei das ARP-Überwachungsmodul auf der Zugangsseite der aktiven Pseudo-Wire und der Standby-Pseudo-Wire konfiguriert ist und spezifisch auf der Basisstationsseite des Zellenstandort-Gateway konfiguriert ist.

4. Verfahren nach einem der Ansprüche 1 bis 3, wobei der Schritt des Überwachens eines ARP-Pakets durch das ARP-Überwachungsmodul Folgendes umfasst:
Überwachen des ARP-Pakets von der Basisstationsseite gemäß einem Protokolltyp des ARP-Pakets und Speichern des überwachten ARP-Pakets in dem Zellenstandort-Gateway CSG der Basisstation.

5. Verfahren nach einem der Ansprüche 1 bis 4, wobei die PW-Redundanzumschaltnachricht von der fehlerhaften aktiven Pseudo-Wire PW gesendet wird.

6. Vorrichtung zum Steuern des Umschaltens zwischen einer aktiven Pseudo-Wire und einer Standby-Pseudo-Wire, umfassend:
Ein "Address Resolution Protocol"- bzw. ARP-Überwachungsmodul (302), ausgelegt zum Überwachen eines ARP-Pakets von der Basisstationsseite gemäß einem Protokolltyp des ARP-Pakets; und
einen ARP-Proxy (304), der für Folgendes ausgelegt ist: wenn eine aktive Pseudo-Wire PW fehlerhaft ist, Empfangen einer Pseudo-Wire- bzw. PW-Redundanzumschaltnachricht und Senden eines durch das ARP-Überwachungsmodul (302) überwachten ARP-Pakets gemäß der PW-Redundanzumschaltnachricht und durch Verwendung einer Standby-Pseudo-Wire PW zu einer mit der Standby-Pseudo-Wire PW verbundenen "Provider Edge-Aggregation" PE-AGG2, so dass die PE-AGG2 das ARP-Paket zu einer mit der PE-AGG2 verbundenen zweiten benutzerzugewandten "Provider Edge" UPE2 sendet und die UPE2 eine virtuelle Schaltinstanz VSI der UPE2 triggert, eine Quellenhardwareadresse des ARP-Pakets zu erfahren, die UPE2 das ARP-Paket zu einer ersten benutzerzugewandten "Provider Edge" UPE1 sendet, die der aktiven PW entspricht, und die UPE1 eine VSI der UPE1 triggert, die Quellenhardwareadresse des ARP-Pakets zu erfahren, um so Abwärtsstreckenverkehr auf die Standby-PW zu schalten.

7. Vorrichtung nach Anspruch 6, wobei der ARP-Proxy (304) auf einer Zugangsseite der aktiven Pseudo-Wire und der Standby-Pseudo-Wire konfiguriert ist und spezifisch auf einer Basisstationsseite eines Zellenstandort-Gateway konfiguriert ist.

8. Vorrichtung nach Anspruch 6 oder 7, wobei das ARP-Überwachungsmodul (302) auf der Zugangsseite der aktiven Pseudo-Wire und der Standby-Pseudo-Wire konfiguriert ist und spezifisch auf der Basisstationsseite des Zellenstandort-Gateway konfiguriert ist.

9. Vorrichtung nach einem der Ansprüche 6 bis 8, wobei:
das ARP-Überwachungsmodul (302) ausgelegt ist zum Überwachen des ARP-Pakets von der Basisstationsseite gemäß einem Protokolltyp des ARP-Pakets und Speichern des überwachten ARP-Pakets in dem Zellenstandort-Gateway CSG der Basisstation.

10. Vorrichtung nach einem der Ansprüche 6 bis 9, wobei die PW-Redundanzumschaltnachricht von der fehlerhaften aktiven PW gesendet wird.

11. Computerprogrammprodukt, **dadurch gekennzeichnet, dass** es Computerprogrammcode umfasst, der, wenn er durch eine Computereinheit ausgeführt wird, bewirkt, dass die Computereinheit die Schritte nach einem der Ansprüche 1 bis 5 ausführt.

12. Computerlesbares Medium, **dadurch gekennzeichnet, dass** Computerprogrammcode nach Anspruch 11 auf dem computerlesbaren Medium gespeichert ist.

## Revendications

1. Procédé pour contrôler une commutation entre un pseudo-circuit actif et un pseudo-circuit de secours, comprenant les étapes suivantes :
lorsqu'un pseudo-circuit, PW, actif est défectueux, recevoir (S100), par un proxy de protocole de résolution d'adresse, ARP, un message de commutation de redondance de PW ;
envoyer (S 102), par le proxy ARP, conformément au message de commutation de redondance de PW et au moyen d'un pseudo-circuit de secours, un paquet ARP surveillé par un module de surveillance ARP à une agrégation de bord de fournisseur, PE-AGG2, connectée au pseudo-circuit de secours, où le module de surveillance ARP surveille un paquet ARP provenant du côté station de base conformément à un type de protocole de paquet ARP ;
envoyer (S104), par la PE-AGG2, le paquet ARP à un second bord de fournisseur utilisateur, UPE2, connecté à la PE-AGG2 ;
déclencher (S106), par l'UPE2, une instance de commutation virtuelle, VSI, de l'UPE2 pour connaître une adresse matérielle source du paquet ARP ;
envoyer (108), par l'UPE2, le paquet ARP à un premier bord de fournisseur utilisateur, UPE1, correspondant au pseudo-circuit actif ; et
déclencher (S110), par l'UPE1, une VSI de l'UPE1 pour connaître l'adresse matérielle source du paquet ARP afin de commuter un trafic en liaison descendante vers le PW de secours.

2. Procédé selon la revendication 1, dans lequel le proxy ARP est configuré d'un côté accès du pseudo-circuit actif et du pseudo-circuit de secours, et est spécifiquement configuré d'un côté station de base d'une passerelle de site cellulaire.

3. Procédé selon la revendication 1 ou la revendication 2, dans lequel le module de surveillance ARP est configuré du côté accès du pseudo-circuit actif et du pseudo-circuit de secours, et est spécifiquement configuré du côté station de base de la passerelle de site cellulaire.

4. Procédé selon l'une quelconque des revendications 1 à 3, dans lequel l'étape de surveillance d'un paquet ARP par le module de surveillance ARP comprend les étapes suivantes :
surveiller le paquet ARP provenant du côté station de base conformément à un type de protocole du paquet ARP, et stocker le paquet ARP surveillé dans la passerelle de site cellulaire CSG de la station de base.

5. Procédé selon l'une quelconque des revendications 1 à 4, dans lequel le message de commutation de redondance PW est envoyé depuis le pseudo-circuit, PW, actif défectueux.

6. Appareil pour contrôler une commutation entre un pseudo-circuit actif et un pseudo-circuit de secours, comprenant :
un module de surveillance de protocole de résolution d'adresse, ARP, (302), configuré pour surveiller un paquet ARP provenant du côté station de base conformément à un type de protocole du paquet ARP ; et
un proxy ARP (304), configuré pour, lorsqu'un pseudo-circuit, PW, actif est défectueux, recevoir un message de commutation de redondance de pseudo-circuit, PW, et envoyer, conformément au message de commutation de redondance de PW et au moyen d'un pseudo-circuit, PW, de secours, un paquet ARP surveillé par le module de surveillance ARP (302) à une agrégation de bord de fournisseur, PE-AGG2, connectée au pseudo-circuit, PW, de secours, de manière à ce que la PE-AGG2 envoie le paquet ARP à un second bord de fournisseur utilisateur, UPE2, connecté à la PE-AGG2 ; l'UPE2 déclenche une instance de commutation virtuelle, VSI, de l'UPE2 pour connaître une adresse matérielle source du paquet ARP, l'UPE2 envoie le paquet ARP à un premier bord de fournisseur utilisateur, UPE1, correspondant au pseudo-circuit actif ; et l'UPE1 déclenche un VSI de l'UPE1 pour connaître l'adresse matérielle source du paquet ARP afin de commuter un trafic en liaison descendante vers le PW de secours.

7. Appareil selon la revendication 6, dans lequel le proxy ARP (304) est configuré d'un côté accès du pseudo-circuit actif et du pseudo-circuit de secours, et est spécifiquement configuré d'un côté station de base d'une passerelle de site cellulaire.

8. Appareil selon la revendication 6 ou la revendication 7, dans lequel le module de surveillance ARP (302) est configuré du coté accès du pseudo-circuit actif et du pseudo-circuit de secours, et est spécifiquement configuré du coté station de base de la passerelle de site cellulaire.

9. Appareil selon l'une quelconque des revendications 6 à 8, dans lequel :
le module de surveillance ARP (302) est configuré pour surveiller un paquet ARP provenant du côté station de base conformément à un type de protocole de paquet ARP et pour stocker le paquet ARP surveillé dans la passerelle de site cellulaire, CSG, de la station de base.

10. Appareil selon l'une quelconque des revendications 6 à 9, dans lequel le message de commutation de redondance de PW est envoyé depuis le PW actif défectueux.

11. Produit programme informatique, **caractérisé en ce qu'**il comprend un code de programme informatique, qui, lorsqu'il est exécuté par une unité centrale, amènera l'unité centrale à exécuter les étapes selon l'une quelconque des revendications 1 à 5.

12. Support lisible par ordinateur, **caractérisé en ce que** le code de programme informatique selon la revendication 11 est stocké sur le support lisible par ordinateur.
